# EUROPEAN PATENT APPLICATION

(11) **EP 4 679 298 A1**
(43) Date of publication of application: **14.01.2026**
(21) Application number: 25768569.3
(22) Date of filing: 04.03.2025
(51) Int. Cl.: G06F 18/241, G06F 18/213, G06F 18/2433, G06F 18/245, G06F 16/3329, G06F 16/338, G06F 16/35, G06F 16/901, G06F 40/295, G06F 40/30

(54) **TARGET PREDICTION METHOD AND SYSTEM**

(30) Priority: 04.03.2024 KR 20240030945; 04.03.2024 KR 20240030946
(71) Applicant: LG Management Development Institute Co., Ltd., Seoul 07336 (KR)
(72) Inventor: CHOE, Hyeok Jun, Seoul 07642 (KR); AHN, Won Bin, Seoul 04210 (KR); CHA, Ji Won, Seoul 07788 (KR); KIM, Eui Soon, Seoul 08083 (KR); LIM, Woo Hyung, Seoul 06004 (KR); BAE, Kyung Hoon, Seoul 06597 (KR)
(74) Representative: BCKIP Part mbB
(86) International application number: PCT/KR2025/002885
(87) International publication number: WO 2025/188050

(57) **Abstract**

A target prediction method for predicting a future outlook of a target performed by a computing device according to an embodiment of the present disclosure is configured to collect related structured and unstructured data when a user requests target prediction, analyze the relationship between the target and a variable affecting the target at a semantic level, and then compute a target outlook of a future.

## Description

### [Technical Field]

The present disclosure relates to a method and system for predicting a target based on relationship information between a target influence variable and a target at a semantic level.

### [Background Art]

Recently, with the emergence of pre-trained language models (Large Language Pretraining models, LLMs) for large-scale general domain data, various tasks that were previously processed manually are being replaced by artificial intelligence-based ones.

In particular, the technology that performs future prediction tasks using large-scale language models is an interesting and rapidly developing technology field, and is called futurecasting.

The futurecasting refers to the use of sophisticated algorithms to predict future trends, events, or behaviors, and may be applied to various fields, from weather pattern prediction to market trend prediction and even social or political change prediction.

Machine learning, a subset of artificial intelligence, may play a pivotal role in this process. Some key aspects and technologies that machine learning models may replace in the futurecasting are as follows.

It is possible to perform tasks that predict future events using past data. The machine learning models may identify patterns in large-scale data sets and use the same to make predictions. For example, in the financial sector, such models may predict stock market trends, and in the medical sector, such models may predict disease outbreaks.

Time series analysis tasks are possible in forecasting fields such as meteorology, economics, and resource management. The machine learning models may analyze data points collected at successive time intervals to predict future points in the series.

In futurecasting, natural language processing (NLP) may be used to analyze news, social media, and other text data to gauge public sentiment or predict political or social trends.

However, the accuracy of the futurecasting model may be limited by the quality and quantity of data, and in particular, it is difficult to predict numerical values by simultaneously utilizing structured and unstructured data.

### [Disclosure]

### [Technical Problem]

An aspect of the present disclosure is directed to providing a target prediction method and system that accurately predicts the short-term and/or mid- to long-term outlook of a target based on data on various variables that may affect the target using a language model.

In detail, the target prediction method and system of an aspect of the present disclosure detect a target influence variable related to a target at a semantic level, and accurately extract a feature affecting the target based on the detected target influence variable at the semantic level to predict the outlook of the target.

In addition, an aspect of the present disclosure may provide a method and system that accurately predicts the target based on structured data and unstructured data on the target and target influence variables.

In addition, the target prediction method and system of an aspect of the present disclosure is designed to predict the outlook of the target from mid-to-long-term onward based on various pieces of text data such as news and reports that may serve as a basis for predicting the targets and target influence variables.

In addition, an aspect of the present disclosure is directed to providing a target prediction method and system that clearly presents a basis for predicting a target outlook based on the target influence variables and features thereof.

In detail, the target prediction method and system of an aspect of the present disclosure may analyze the target influence variables that affect the target at a semantic level and provide a basis for the outlook of the target based on the causal relationship with the features of the target influence variables.

### [Technical Solution]

An embodiment of present disclosure relates to a target prediction method for predicting a future outlook of a target performed by a processor of a computing device, wherein the method includes: receiving a target prediction request from a user; determining a target prediction element to be predicted in the received target prediction request; searching for a target outlook report for the target of the determined target prediction element, and generating relationship information between the target and a target influence variable at a semantic level based on the searched target outlook report; filtering structured data of a feature related to the target influence variable and unstructured data of a text document related to the target influence variable based on the target influence variable of the generated relationship information; computing a target outlook of a future based on the filtered structured data and unstructured data; generating a basis of the computed target outlook as the relationship information at a feature level; and providing the user with the computed target outlook and the relationship information at the feature level.

In this connection, the reception of the target prediction request from the user may include: providing a chat interface to the user and receiving a text containing the target prediction request; and contextually analyzing the received text to detect a context indicating the target prediction request.

In addition, the determination of the target prediction element may further include performing named entity recognition on the text containing the target prediction request and determining keywords representing the target as the target prediction element, a total outlook period, and a prediction unit period.

In this connection, the determination of the target prediction element may further include listing a plurality of recognized target keywords and providing the same for the user to select when target keywords of a generic concept and target keywords of a specific concept for the target of the target prediction element are recognized in plural.

In addition, the generation of the relationship information may include: defining the target influence variable that affects the target at the semantic level; and generating a causal relationship graph as the relationship information with names of each defined target influence variable as node names.

In addition, the generation of the relationship information may further include indicating a sequence relationship between the target influence variables represented by each node of the causal relationship graph using arrows.

In addition, the filtration of the structured data of the feature and the unstructured data of the text document related to the target influence variable may include: classifying features stored in a data store into the target influence variables defined at the semantic level; and generating a structured data set by concatenating the structured data of the features classified into the target influence variables.

In addition, the filtration of the structured data of the feature and the unstructured data of the text document related to the target influence variable may include inputting the text document into a document classification prompt template and discriminating through a language model whether the text document is a document that affects the target.

In this connection, the computation of the target outlook of the future may include: detecting the target outlook report predicting an outlook of the target from the text document; performing sentiment analysis on sentences predicting the target in the target outlook report using the language model, and classifying an outlook value of the target as positive, neutral, or negative for each target outlook report; quantifying a level of a tone of the classified sentiment and returning the same as predicted scoring data; and generating quantification data by listing the predicted scoring data of the target outlook reports in a chronological order.

In addition, the computation of the target outlook of the future may include: concatenating the structured data and the quantification data to generate an integrated structured data set; and inputting the generated integrated structured data set into a prediction model to output a target outlook value.

In addition, the computation of the target outlook of the future may further include regulating the target outlook value based on the relationship information between the target and the target influence variable.

In addition, the generation as the relationship information at the feature level may include generating the features of the target influence variable that serves as a basis for predicting the target outlook value as the relationship information.

In addition, the generation as the relationship information at the feature level may include generating the relationship information including numerical values of the features that affect the predicted target outlook value at one point in time.

In addition, there may be further included performing a simulation according to a received predicted environment change input when the predicted environment change input is received from the user.

In this connection, the performance of the simulation according to the received predicted environment change input may include: changing the structured data of the feature according to a change target influence variable when there is a change to the feature of the target influence variable; and re-executing a target outlook value and a process interpreting the basis based on the changed structured and unstructured data and outputting the target outlook value and basis information based on a what-if simulation.

In addition, the performance of the simulation according to the received predicted environment change input may further include detecting a case similar to a specific event occurrence and computing a target outlook value based on the detected case when the specific event occurrence is received from the user as the predicted environment change input.

An embodiment of the present disclosure relates to a server computing system that receives a target prediction request from a user computing device and performs a target prediction task, wherein the system includes: a data store that stores target prediction-related data; a memory that stores instructions and data for performing the target prediction task; and at least one processor for performing the target prediction task according to the instructions and data of the memory, wherein the at least one processor is configured to: receive a target prediction request from a user; determine a target prediction element to be predicted in the received target prediction request; search for a target outlook report for a target of the determined target prediction element, and generate relationship information between the target and a target influence variable at a semantic level based on the searched target outlook report; filter structured data of a feature related to the target influence variable and unstructured data of a text document related to the target influence variable based on the target influence variable of the generated relationship information; compute a target outlook of a future based on the filtered structured data and unstructured data; generate a basis of the computed target outlook as the relationship information at a feature level; and provide the user with the computed target outlook and the relationship information at the feature level.

### [Advantageous Effects]

The target prediction method and system according to an embodiment of the present disclosure can accurately predict a target outlook by precisely performing data preparation necessary for target prediction and predicting the target outlook based on prediction basic data acquired.

Specifically, the target prediction method and system according to an embodiment of the present disclosure can precisely filter structured data and unstructured data related to target influence variables after defining the target influence variables that affect targets at a semantic level.

In addition, the target prediction method and system according to an embodiment of the present disclosure can accurately predict a target outlook value through a time series prediction model by integrating structured data and unstructured data filtered as such.

Specifically, the target prediction method and system according to an embodiment of the present disclosure can quantify unstructured data, accurately filter only features related to target influence variables from structured data, and then generate an integrated structured data set, thereby generating a structured data set necessary for time series target prediction.

In addition, the target prediction method and system according to an embodiment of the present disclosure can increase the reliability of the target outlook by interpreting the basis for the predicted target outlook value and providing basis data for prediction.

In addition, the target prediction method and system according to an embodiment of the present disclosure can respond to various user requests by performing simulations based on changes in the target predicted environment of a user.

### [Description of Drawings]

FIG. 1 illustrates an example of a block diagram illustrating a computing system performing a target prediction method according to an embodiment of the present disclosure.
FIG. 2 illustrates an example of a block diagram illustrating a computing device, which is one of the configurations of a computing system performing a target prediction method according to an embodiment of the present disclosure.
FIG. 3 illustrates an example of a block diagram illustrating a computing device, which is one of the configurations of a computing system performing a target prediction method according to an embodiment of the present disclosure, from another aspect.
FIG. 4 is a flowchart of a method for predicting a target outlook using a machine learning model according to an embodiment of the present disclosure.
FIG. 5 illustrates a meta-architecture for performing a method for predicting a target outlook according to an embodiment of the present disclosure.
FIG. 6 is an example of a process for executing a target prediction task and determining causal information with target prediction variables according to an embodiment of the present disclosure.
FIG. 7 is an example of a process for performing data preparation based on relationship information between a target and a target influence variable according to an embodiment of the present disclosure.
FIG. 8 is an example of a process for converting unstructured data into quantitative data according to an embodiment of the present disclosure.
FIG. 9 is an example of a process for computing a target outlook by integrating structured data and quantitative data according to an embodiment of the present disclosure.
FIG. 10 is an example of a process for deriving a basis for a target outlook and a process for predicting an additional target outlook according to a user simulation according to an embodiment of the present disclosure.
FIG. 11 is an example of a chart for a predicted target outlook according to an embodiment of the present disclosure.
FIG. 12 is an example of a causal graph presented as basis data for a predicted target outlook according to an embodiment of the present disclosure.
FIG. 13 is another example of a causal graph presented as basis data for a predicted target outlook according to an embodiment of the present disclosure.

### [Mode for Disclosure]

Embodiments can impose various transformations that can have various embodiments, and specific embodiments illustrated in the drawings will be described in detail in the detailed description. The advantages, features and methods for achieving the same will become apparent from the following description of the embodiments given in conjunction with the accompanying drawings. However, the present disclosure is not limited to the embodiments described herein but may be embodied in many different forms. It will be understood that, although the terms "first", "second", etc., may be used herein to distinguish one component from another component, these components should not be limited by these terms. In addition, a singular expression includes a plural expression, unless the context clearly states otherwise. In addition, it should be understood that the terms such as "include" or "have" are merely intended to indicate that features, or components described in the specification are present, and are not intended to exclude the possibility that one or more other features, or components will be added.

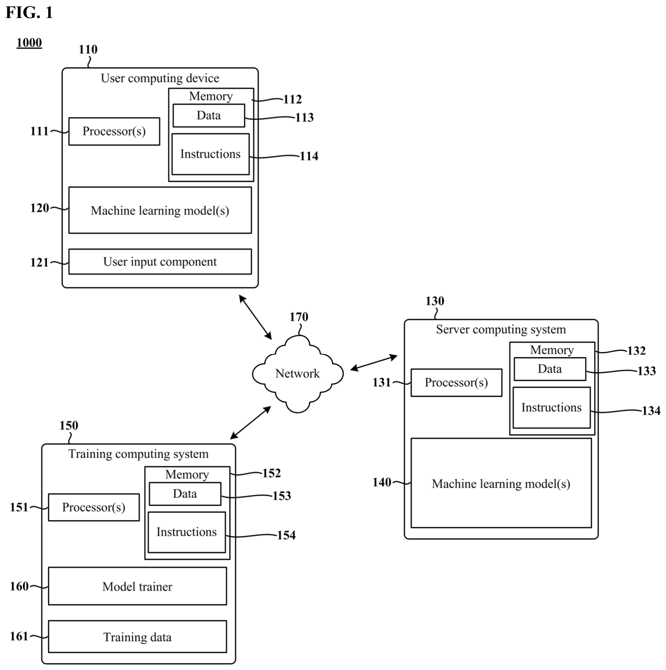

FIG. 1 illustrates an example of a block diagram illustrating a computing system performing a target prediction method according to an embodiment of the present disclosure

Referring to FIG. 1, a computing system 1000 for performing target prediction according to an embodiment of the present disclosure includes a user computing device 110, a training computing system 150, and a server computing system 130, and each device and system are communicatively connected through a network 170.

According to an embodiment of the present disclosure, 1) the user computing device 110 may perform the target prediction method using a local and/or external machine learning model 120 or using a machine learning model 140 provided by a server.

In addition, according to another embodiment of the present disclosure, 2) the server computing system 130 communicating with the user computing device 110 may provide a target prediction service to the user computing device 110 on an application and/or a web according to a user request via the user computing device 110.

In addition, according to yet another embodiment of the present disclosure, 3) the user computing device 110 and the server computing system 130 may perform at least a portion of a method for performing target prediction in conjunction with each other to provide a target prediction service to a user.

In addition, according to various embodiments of the present disclosure, the user computing device 110 and/or the server computing system 130 may train the models 120 and/or 140 used to predict targets via interaction with the training computing system 150 that is communicatively connected over the network 180. In addition, the training computing system 150 may be separate from the server computing system 130 or may be a portion of the server computing system 130.

In some embodiments, the training computing system 150 may be a portion of the server computing system 130 or a portion of the user computing device 110.

In the following description, the user computing device 110 is connected to the server computing system 130 to execute a target prediction task, the server computing system 130 collects and analyzes data needed for target prediction using a language model directly or from a separate server, and performs target outlook prediction based on the collected and analyzed data. However, it can be understood that a portion of the process described as being performed in the server computing system 130 is also included in the description of the present disclosure when performed in the user computing device 110.

The user computing device 110 may include any type of computing device, such as a smart phone, a mobile phone, a digital broadcasting device, a personal digital assistant (PDA), a portable multimedia player (PMP), a desktop, a wearable device, an embedded computing device, and/or a tablet PC.

The user computing device 110 includes at least one processor 111 and a memory 112. Herein, the processor 110 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 112 may include one or more non-transitory/transitory computer-readable storage media, such as RAM, ROM, EEPROM, EPROM, flash memory devices, magnetic disks, etc., and combinations thereof, and may include web storage of servers performing storage functions of the memory on the Internet. The memory 112 may store data and instructions necessary for the at least one processor 111 to perform the operation of an application for performing target prediction.

In an embodiment, the user computing device 110 may store at least one machine learning model 120. For example, the user computing device 110 may be various machine learning models such as a plurality of neural networks (for example, deep neural networks) that perform predictions on targets based on structured/quantitative data or other types of machine learning models, including non-linear models and/or linear models, and may be configured of a combination thereof.

For example, the prediction model may store linear regression, decision tree, random forest, gradient boosting, pre-trained language model and/or deep learning model. The neural network may include at least one of feed-forward neural networks, recurrent neural networks (for example, long short-term memory recurrent neural networks), convolutional neural networks and/or other forms of neural networks.

In addition, the user computing device 110 may store a model to be used in each process and a prompt template that serves as a basis for input to the model in order to perform at least a portion of the process performed for target prediction through a large-scale language model (LLM).

For example, the user computing device 110 may store 1) a prompt for generating a query from a user input, 2) a prompt for determining causation between a target and a target influence variable, 3) a prompt for identifying raw data associated with to the determined causation, and 4) a prompt template for quantifying unstructured data.

In other words, in an embodiment, the user computing device 110 may perform target prediction based on the received data by requesting the performance of some performance stages in the target prediction task to the language model of an external server through a prompt.

In another embodiment, the target prediction task requested through the user computing device 110 may be performed in such a way that the server computing system 130 performs target prediction through at least one machine learning model 140 and a machine learning model of another server, thereby providing predicted data to the user computing device 110.

The user computing device 110 may include at least one input component 121 that detects user input. For example, the user input component 121 may include a touch sensor (for example, a touch screen and/or a touch pad) that detects touch of an input medium of a user (for example, a finger or a stylus), an image sensor that detects a motion input of a user, a microphone, a button, a mouse and/or a keyboard that detects user voice input. In addition, the user input component 121 may include an interface and an external controller when receiving input from an external controller (for example, a mouse or a keyboard) through the interface.

The server computing system 130 includes at least one processor 131 and a memory 132. Herein, the processor 131 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

In addition, the memory 132 may include one or more non-transitory/transitory computer-readable storage media, such as RAM, ROM, EEPROM, EPROM, flash memory devices, magnetic disks, etc., and combinations thereof. The memory 132 may store prompt templates for the processor 131 to perform tasks through the language model of the server computing system 130 and/or the language model of the external server, and data and instructions needed for the machine learning model 140 for futurecasting.

For example, the server computing system 130 may include a neural network and/or other multi-layer nonlinear model as the machine learning model 140 for futurecasting. Example neural networks may include feed forward neural networks, deep neural networks, recurrent neural networks, and convolutional neural networks.

In an embodiment, the server computing system 130 may be implemented including at least one computing device. For example, the server computing system 130 may be implemented such that a plurality of computing devices operate according to a sequential computing architecture, a parallel computing architecture, or a combination thereof. In addition, the server computing system 130 may include the plurality of computing devices connected to a network.

In an embodiment, the server computing system 130 may further include a data store computing system 1000 (hereinafter, "data store"), which is a storage for continuously storing and managing raw data that serves as the basis for futurecasting for a target. The data store may include various forms of data storage, ranging from a file system to cloud storage.

For example, the data store may include: a relational database that uses a structured query language (SQL) to define and manipulate data; a NoSQL database that is designed for flexibility and scalability and processes unstructured and semi-structured data; and a database of at least one of data warehouse that centralizes large amounts of data from a plurality of sources and is optimized for querying and analysis, a data warehouse that stores large amounts of raw data in their basic formats of structured, semi-structured, and unstructured data, or a local storage device or network-attached storage (NAS) that store data in files, typically in a format that may be accessed by the computer operating system, as a system used for reporting and data analysis.

The training computing system 150 includes at least one processor 151 and a memory 152. Herein, the processor 151 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions. In addition, the memory 152 may include one or more non-transitory/transitory computer-readable storage media, such as RAM, ROM, EEPROM, EPROM, flash memory devices, magnetic disks, etc., and combinations thereof. This memory 152 may store data and instructions necessary for the processor 151 to train a futurecasting model.

For example, the training computing system 150 may include a model trainer 160 that trains the machine learning model stored at the user computing device 110 and/or the server computing system 130 using various training or learning techniques, such as, for example, backwards propagation of errors.

For example, the model trainer 160 may update one or more parameters of a machine learning model for futurecasting using a backpropagation method based on a defined loss function.

In some implementations, performing backwards propagation of errors may include performing truncated backpropagation through time. The model trainer 160 may perform a number of generalization techniques (for example, weight decays, dropouts, knowledge distillation, etc.) to improve the generalization capability of the futurecasting models being trained.

In addition, the model trainer 160 includes computer logic utilized to provide desired functionality. The model trainer 160 may be implemented in hardware, firmware, and/or software controlling a general purpose processor. For example, in an embodiment, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 170 may include a 3rd generation partnership project (3GPP) network, a long term evolution (LTE) network, a world interoperability for microwave access (WIMAX) network, Internet, a local area network (LAN), a wireless LAN, a wide area network (WAN), a personal area network (PAN), a Bluetooth network, a satellite broadcasting network, an analog broadcasting network and/or a digital multimedia broadcasting (DMB) network, but is not limited thereto.

In general, communication over the network 180 may be carried via any type of wired and/or wireless connection, using a wide variety of communication protocols (for example, TCP/IP, HTTP, SMTP, FTP), encodings or formats (for example, HTML, XML), and/or protection schemes (for example, VPN, secure HTTP, SSL).

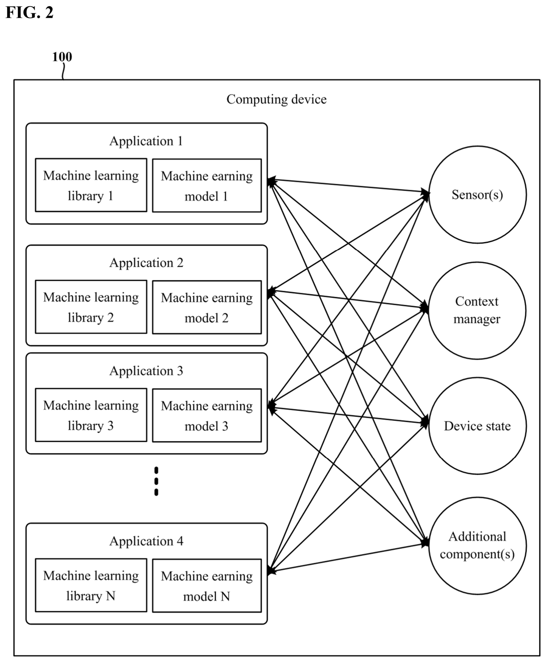

FIG. 2 illustrates an example of a block diagram illustrating a computing device, which is one of the configurations of a computing system performing a target prediction method according to an embodiment of the present disclosure.

Referring to FIG. 2, the computing device 100 included in the user computing device 110, the server computing system 130, and the training computing system 150 includes a plurality of applications (for example, application 1 to application N). Each application may include a machine learning library. For example, the applications may include a futurecasting application, a text messaging application, an e-mail application, a dictation application, a virtual keyboard application, a browser application, a chat-bot application, and a separate futurecasting application.

In an embodiment, the computing device 100 may include the model trainer 160 for training the futurecasting model, and may store and operate the futurecasting model to perform a target prediction task on input data.

Each application of the computing device 100 may communicate with a number of other components of the computing device, such as, for example, one or more sensors, a context manager, a device state component, and/or additional components. In an embodiment, each application may communicate with each device component using an API (for example, a public API). In an embodiment, the API used by each application may be specific to the relevant application.

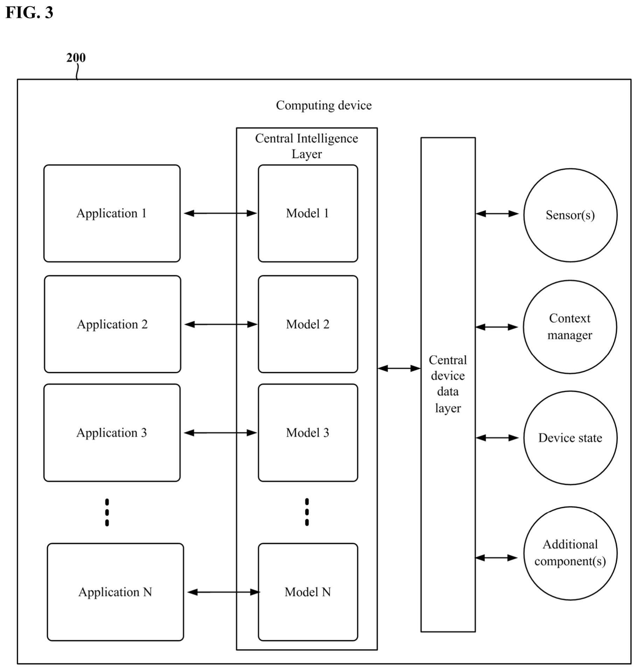

FIG. 3 illustrates an example of a block diagram illustrating a computing device, which is one of the configurations of a computing system performing a target prediction method according to an embodiment of the present disclosure, from another aspect.

Referring to FIG. 3, the computing device 200 includes a plurality of applications (for example, application 1 to application N). Each application is in communication with a central intelligence layer. For example, the applications may include an image processing application, a text messaging application, an e-mail application, a dictation application, a virtual keyboard application, and a browser application. In an embodiment, each application may communicate with the central intelligence layer (and model(s) stored therein) using an API (for example, a common API across all applications).

In addition, the central intelligence layer may include prompts using a plurality of machine learning models and/or language models. For example, as illustrated in FIG. 1, a respective machine learning model and at least some thereof may be provided for each application and managed by the central intelligence layer. In other implementations, two or more applications may share a single machine leaning model. For example, in some implementations, the central intelligence layer may provide a single model for all of the applications. In some implementations, the central intelligence layer may be included within an operating system of the computing device 200 or implemented differently.

The central intelligence layer may communicate with a central device data layer. The central device data layer may be a centralized data storage for the computing device 200. As illustrated in FIG. 3, the central device data layer may communicate with a number of other components of the computing device, such as, for example, one or more sensors, a context manager, a device state component, and/or additional components. In some implementations, the central device data layer may communicate with each device component using an API (for example, a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein may be implemented using a single device or component or a plurality of devices or components working in combination. Databases and applications may be implemented on a single system or distributed across a plurality of systems. Distributed components may operate sequentially or in parallel.

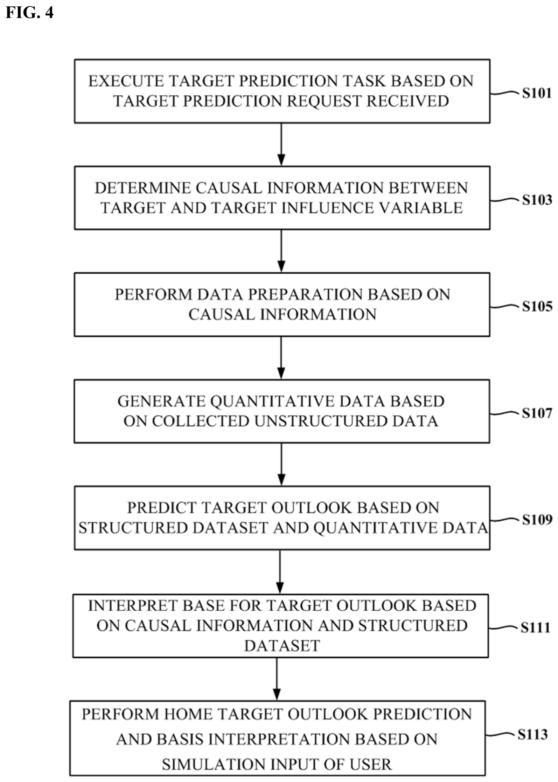

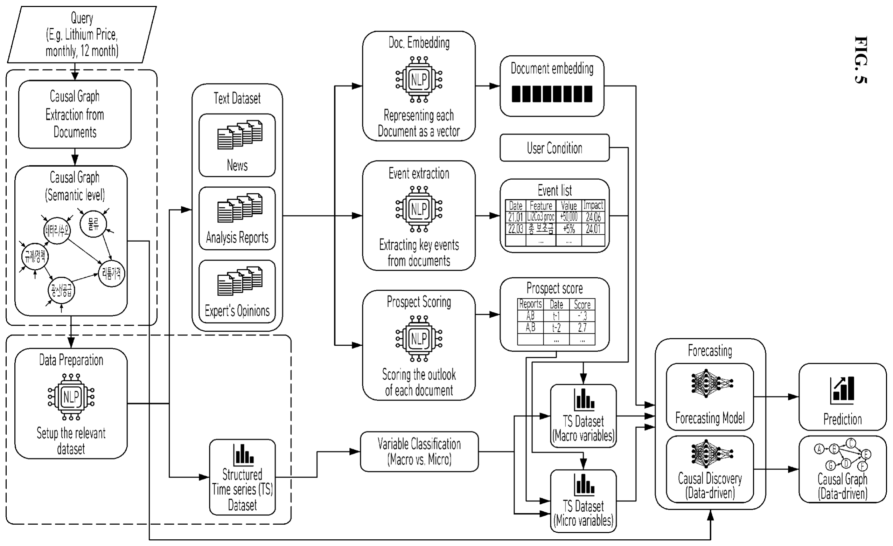

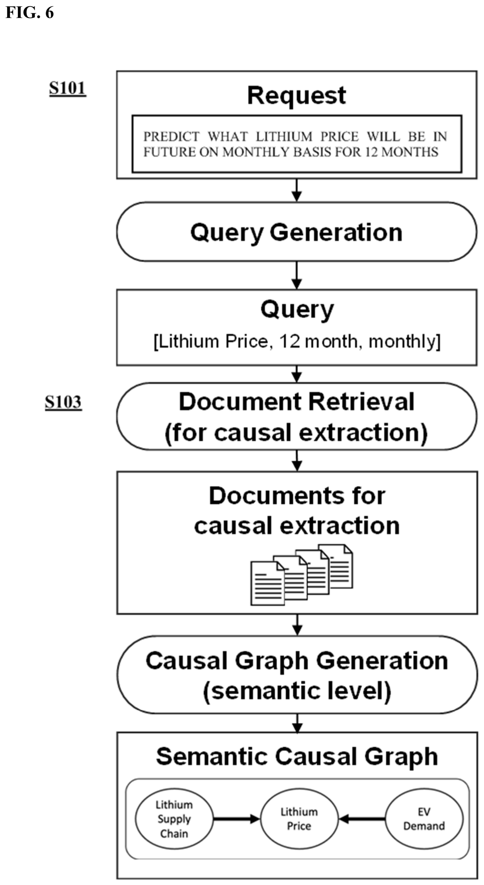

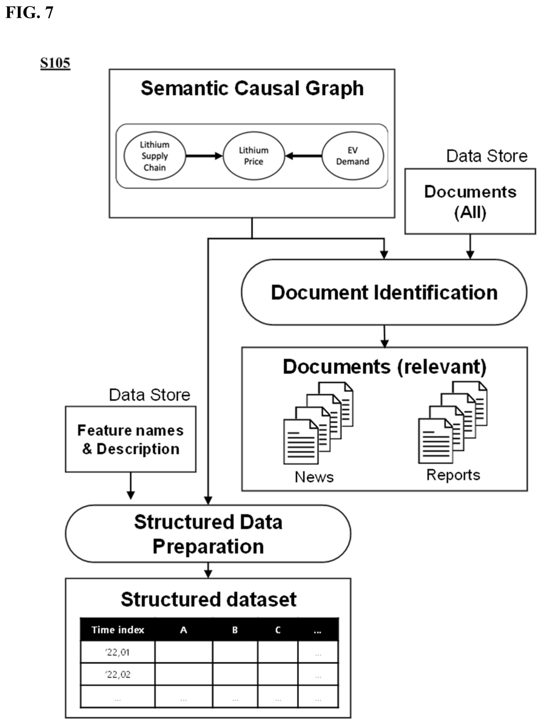

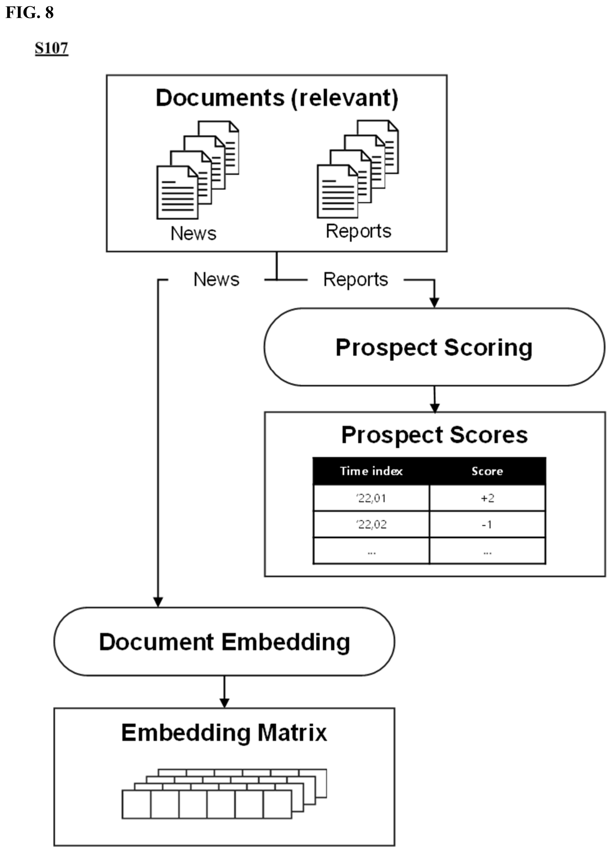

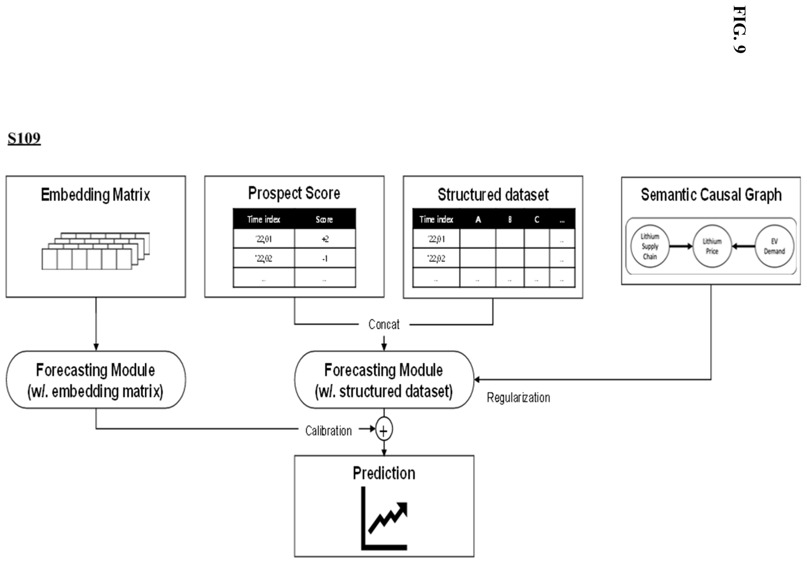

Hereinafter, a target prediction method and system in which the computing system 1000 collects raw data using a language model, analyzes the collected raw data to predict the outlook of a target, and provides causal information that serves as a basis for the outlook prediction will be described with reference to FIGS. 4 to 13.

First, a target prediction request may be received from the user computing device 110 of the computing system 1000, and a target prediction task may be executed according to the received target prediction request (S101).

In an embodiment, the user computing device 110 may receive a text-based target prediction request from a user through a chatting interface, transmit a text including the target prediction request to the server computing system 130, and execute the target prediction task of the server computing system 130.

The server computing system 130 may execute the target prediction task by detecting a previously stored phrase for the target prediction request from a text input through the chatting interface, or by analyzing the text based on context to detect the context of the target prediction request.

In addition, the server computing system 130 may recognize a text including the target prediction request and determine a target prediction element for target prediction.

Herein, the target prediction element may include a target to be predicted, and may further include at least one of a total outlook period (prediction length) and a prediction unit period (unit time) to be predicted.

In an embodiment, the target includes information on a numerical value that changes over time, and predicting the target includes predicting and computing the numerical value of a future target by predicting also the total outlook period at an interval of prediction unit period.

Specifically, the server computing system 130 may inset the text of the target prediction request into a query generation prompt template that analyzes the text of the target prediction request to determine the target prediction element, input the text into the language model, and return at least one of the target prediction elements as output from the language model to determine the target prediction element.

For example, the query generation prompt template may be configured to input "text of target prediction request" into an interactive prediction request section as input, and to recognize values corresponding to the target, total outlook period, and unit period based on named entity recognition (NER) as an operation, and return the target, total outlook period, and unit period of the query as an output value.

As a more specific example, when a user inputs a target prediction request text, "Predict what the lithium price will be in the future on a monthly basis for 12 months," the server computing system 130 may determine the target prediction element by inputting <<Input: Interactive prediction request "Predict what the lithium price will be in the future on a monthly basis for 12 months," Operation: Recognizes the values corresponding to the target, total outlook period, and unit period for the input text through the NER, and generates and returns the following query, Output: Query - {Target:, Unit Period:, Total Outlook Period: }>> as a prompt to the language model to output the target prediction element as {Target: Lithium market price, Unit Period: Monthly, Total Outlook Period: 12 months}.

In this connection, the server computing system 130 may provide a separate futurecasting interface for inputting target prediction elements for target prediction when the target prediction elements are not specified or are abstract, and transmits the target prediction elements input through the provided futurecasting interface to the server computing system 130 to execute the target prediction task. In other words, when the target is classified from a superordinate concept to a number of subordinate concepts according to the category, the server computing system 130 may list target keywords mapped to the superordinate and subordinate concepts and provide the same for a user to select.

For example, the futurecasting interface may provide target keywords derived through the NER sequentially from a superordinate concept to a subordinate concept and provide the same for a user to select, so that the user may more accurately determine the target that the user wants to predict.

When the target prediction elements are determined, the server computing system 130 may determine relationship information between the target and the target influence variable (S103).

First, the server computing system 130 may collect target analysis data for the target. This may be done by filtering data in the data store within the server computing system 130 or crawling data on the Internet.

For example, the server computing system 130 may detect target analysis data by performing keyword search based on keywords indicating the determined target. Herein, the target analysis data may be analysis reports related to the target.

Specifically, the server computing system 130 may request to search for analysis data associated with the target based on keywords of the target and return the analysis data through analysis reports based on a target analysis report collection prompt template set in advance in the language model.

More specifically, the server computing system 130 may acquire the target analysis report as output by using the target analysis report collection prompt template to <<Input: Target - Lithium market price, Operation: Search and return an analysis report with a title associated with the target through a keyword search>>.

In addition, the server computing system 130 may detect target influence variables that affect the target from the collected target analysis data, and analyze and generate relationship information between the target and the target influence variable.

In an embodiment, the relationship information may include information on target influence variables that affect the future prediction of the target, and information on the relationship between the target influence variables and the target.

More specifically, the information on the target influence variables may refer to information defining target influence variables at a semantic level, and the information on the relationship between the target influence variables and the target may refer to causal relationships and influence proportions and weights between targets and target influence variables and between target influence variables.

Hereinafter, the relationship information between the target and the target influence variable will be referred to as causal information.

In an embodiment, the server computing system 130 may analyze a semantic causal graph as target-target influence variable associative relationship information at a semantic level based on the collected target analysis data to generate causal information.

To this end, in an embodiment, the server computing system 130 may perform a topic-relevant terms recognition module on target analysis data to detect and annotate target influence variables associated with the target in the target analysis data.

In addition, the server computing system 130 may input the target and target influence variables into a causal graph generation model that is trained to generate a causal graph between the target and the target influence variables based on the target analysis data annotated, thereby generating a causal graph at a semantic level.

Herein, the causal graph between the target and the target influence variables may include information defining the target and target influence variables at a semantic level in nodes along with node names.

For example, the information for determining the target and target influence variables at a semantic level may include additional annotations such as the name, keyword, source, domain, region, place, and characteristics of the corresponding elements.

In addition, the causal graph between the target and the target influence variables may include information on the causation about whether the mutual influence between each node (target and target influence variables) precedes or follows through arrows.

In an embodiment, the server computing system 130 may perform a process of collecting target analysis data based on context and outputting causal information between the target and the target influence variable based on the collected target analysis data through a retrieval augmented generation (RAG) model.

Through the process of generating causal information according to such an embodiment, the target influence variable may be clearly identified and defined at a semantic level by concepts, categories, topics, and/or specific criteria, so that the context and domain related to the target influence variable at the semantic level may be accurately determined.

Then, the information defined as such may be annotated to the target influence variable and utilized to perform data preparation at the semantic level later, so that the raw data necessary for target prediction may be accurately discriminated.

When the causal information between the target and the target influence variable is determined, the server computing system 130 may perform data preparation based on the determined causal information (S105).

First, the server computing system 130 may collect raw data related to the target influence variable and the target of the causal information for the outlook prediction of a target.

In an embodiment, the server computing system 130 may collect unstructured data (for example, news in text form, analysis reports, etc.) related to the target and the target influence variables and structured data through keyword searches indicating the target and target influence variables, and store the collected raw data in the data store.

In addition, the server computing system 130 may determine whether the raw data stored in the data store is related to the target influence variables at the semantic level (document identification) and extract the related data. In this connection, the raw data may be filtered according to whether it matches the semantic definition included in the aforementioned target and target influence variables, and the prediction basic data necessary for target prediction may be acquired.

For example, the server computing system 130 may input a document to be determined as input and output the relevance of the target influence variable at the semantic level as an operation, thereby extracting prediction basic data related to the target and the target influence variable at the semantic level from the raw data.

In order to identify data related to the target influence variable that affects the target, past data analysis knowledge and domain expertise in the target-related field are important.

To supplement this, the server computing system 130 may derive events related to the target and events unrelated to the target through a language model.

For example, the server computing system 130 may instruct the language model through a prompt for writing related/unrelated events that includes a phrase that instructs a user to operate as a domain expert for the target, thereby returning a plurality of associated events that affect the change of the target at the semantic level and a plurality of non-associated events that do not affect or affects below a reference value.

Specifically, an associated/non-associated event writing prompt may include information defining each target influence variable at the semantic level so as to instruct the language model to distinguish associated events and non-associated events that affect the target from the prediction basic data.

Then, the server computing system 130 writes a document identification prompt for classifying and identifying the prediction basic data from the raw data through the returned associated/non-associated events, and requests the language model to classify documents for the raw data based on the written document identification prompt, thereby accurately extracting the prediction basic data related to the target and the target influence variable.

In addition, the unstructured data related to the outlook of the target may be detected from the prediction basic data related to the target and/or the target influence variable. In other words, the server computing system 130 may classify documents associated with the target and/or the target influence variable from the raw data stored in the data store, and detect associated events and/or sentences that affect the target from the documents.

For example, a document classification prompt may be configured to 1) instruct the target to operate as an expert, 2) input at least one document included in the raw data to be identified as input data, 3) instruct to select one of the associated event options associated with the prediction of the target in the document and the non-associated event options that do not affect the target, and 4) add an associated event that affects the target among the information in the document to the associated event options or add a non-associated event that does not affect the target to the non-associated event options.

As a specific example, when the element to be predicted is "lithium production," the server computing system 130 may identify whether the document in the raw data is related to "lithium production" through the prompt configured of <<1) Become a lithium expert. 2) Input: [document] 3) Classify [documents] related to the increase or decrease in lithium production. There are two options for your answer. - Option 1: Highly relevant (list of associated events), - Option 2: Not relevant (list of non-associated events), 4) First, describe the reason how the information provided in relation to lithium production increases or decreases. Then, place the option number on the last line. >>.

In other words, the server computing system 130 may collect raw data in relation to the target and/or target influence variables, classify prediction basic data related to the target and/or target influence variables from the raw data, and determine associated events and sentences that affect the outlook of the target from the classified prediction basic data, thereby filtering out sentences and associated events related to the target outlook from the raw data as unstructured data.

Next, the server computing system 130 may identify and classify whether each feature stored in the data store belongs to a related target influence variable (semantic variables) using a language model, and may generate a structured dataset configured of structured data for the related feature. Herein, the feature means an attribute of data stored in a structured data format as various factors that may affect the outlook of the target, and may include, for example, CSV, Excel file, and/or database table.

For example, when the target is lithium price, the target influence variables refer to variables that have causation with lithium price, such as "spodumene, lithium mine, lithium salt lakes, lithium carbonate, lithium hydroxide, lithium battery," and the features may be structured data that belongs to the target influence variables and affects the outlook of the target, such as "Australian spodumene production, Australian spodumene exports, Chilean lithium hydroxide production, Chilean lithium hydroxide exports, Chinese spodumene imports, Chinese lithium carbonate imports, Chinese lithium carbonate production, Chinese lithium carbonate sales, lithium battery efficiency (km/wh), Chinese electric vehicle sales, and Chinese electric vehicle subsidy plan."

In other words, in an embodiment, the target influence variables may be specific concepts, topics, or categories that affect the target outlook, and the features may refer to attributes of structured data in the data storage related to the target influence variables.

In addition, the server computing system 130 may filter out relevant features related to target influence variables among the features of the data store and integrate the filtered features to generate a structured dataset.

Specifically, the process of generating a structured dataset may be described as follows: First, the server computing system 130 may list features that may be used in the data store by feature name. In addition, a description for each feature may be listed together.

In addition, the server computing system 130 may filter features related to target influence variables that may affect the target among the listed features based on the association with the target influence variables defined at the semantic level.

To this end, the server computing system 130 may utilize a machine learning model or a language model that classifies the relevance between features and target influence variables.

In an embodiment, the server computing system 130 may list the feature names and descriptions of the data store, input the keywords of the target influence variables of the causal information into a word embedding model, and detect the feature names associated with the keywords of each target influence variable according to feature relevance, thereby mapping the features classified into each target influence variable. Herein, the word embedding means a model trained to classify features relevant to semantic target influence variables based on feature names and descriptions.

In addition, the server computing system 130 may obtain structured data (tubular data) corresponding to the name of the classified feature from the data store, organize and preprocess the obtained structured data, and arrange the same into a structured format and process the same so as to be suitable for input into target prediction modeling, and may generate a time-series structured data format (for example, csv, excel, and the like).

As such, the server computing system 130 may collect accurate raw data that serves as the basis for target prediction based on the causal information between the target and the target influence variables, and may precisely filter the structured data and unstructured data necessary for target prediction from the collected raw data and utilize the same as input data for target prediction modeling.

Next, the server computing system 130 may generate quantitative data by quantifying the unstructured data (Text Processing for Forecasting). (S107)

First, the server computing system 130 may generate prediction scoring data by scoring target prediction values for each target outlook report for the target outlook reports that predict target outlook among the documents classified as unstructured data.

In detail, in an embodiment, the server computing system 130 inputs each target outlook report into a language model, performs sentiment analysis on the associated sentences classified as target outlook predictions, classifies the target outlooks into positive, neutral, and negative, and operates according to the target outlook scoring prompt that returns a numerical value of the tone level, thereby listing the prediction scoring data in chronological order to generate quantitative data.

Specifically, the returned target outlook scoring prompt may be configured to classify opinions on the target outlook from the input text into positive/neutral/negative when a target outlook report (or, associated sentences related to the target outlook extracted from the target outlook report) is input, and select a tone for the outlook opinion from the input text within a predetermined level range.

In addition, the server computing system 130 may generate an event list based on associated events that affect the outlook of the target detected in documents during unstructured data filtering.

For example, the server computing system 130 may generate an event list that quantifies the occurrence date of an event affecting the outlook of the target, related features, values of related features, and impact and influence that affected the outlook of the target as quantitative data.

In addition, the server computing system 130 may encode each document classified as unstructured data into a latent vector through the encoder of the language model and return an embedding matrix. Specifically, the server computing system 130 may obtain an embedding matrix that captures the semantic essence of each document by encoding the document into the latent vector using the language model.

In detail, the server computing system 130 may input documents, such as news, among unstructured data, into the encoder of the language model to generate document embedding metrics for modeling topics prevalent in each document. The document embeddings generated as such may highlight topics (variables, features) that may affect the future outlook of the target by identifying topics prevalent in the document using an algorithm such as Latent Dirichlet Allocation (LDA).

Thereafter, the server computing system 130 may predict the target outlook based on the generated structured dataset and quantitative data. (S109)

In detail, the server computing system 130 may calculate an outlook value of a target for each prediction unit period during the total outlook period based on the quantitative data and the structured dataset.

To this end, the server computing system 130 may generate an integrated structured dataset by concatenating the structured dataset generated based on structured data and the quantitative dataset generated based on unstructured data.

Specifically, the server computing system 130 may first classify the data according to the influence that affects the target, and then concatenate the data by assigning weights.

For example, the server computing system 130 may classify variables that affect the target more than the reference value among the features included in the structured dataset as macro variables, and classify variables that affect the target less than the reference value as micro variables.

In addition, the server computing system 130 may integrate the classified macro variables and quantitative data into one macro time series structured dataset after matching the same in a time series manner, and may integrate the data classified into micro variables into one micro time series structured dataset.

In other words, in an embodiment, an integrated structured dataset including both structured data information and unstructured data information may be generated by matching and concatenating the event list and prediction scoring data according to the time series flow of the structured dataset.

In addition, the server computing system 130 may input the generated integrated structured dataset into a prediction model to compute the outlook value of the target for each prediction unit period during the total outlook period. Herein, the prediction model may include linear regression, decision tree, random forest, gradient boosting, deep learning model, and/or pre-trained language model.

In an embodiment, the server computing system 130 may additionally input causal information at a semantic level into the prediction model to induce prediction of target outlooks according to the causal information.

In addition, in an embodiment, the server computing system 130 may input the aforementioned embedding metrics into a second prediction model that predicts a target outlook based on the embedding metrics, so as to reflect unstructured target prediction information that is not in structured data into a prediction value.

Specifically, in an embodiment, the server computing system 130 may input an integrated structured dataset into a first prediction model to primarily compute a first target outlook value.

In addition, the server computing system 130 may regulate the first target outlook value based on the semantic causal graph to compute a second target outlook value reflecting the causal information between the target influence variable and the target.

Finally, the server computing system 130 may calibrate the computed second target outlook value based on the unstructured target prediction information to finally compute a final target outlook value.

In addition, the server computing system 130 may generate basis information by interpreting the basis for the target outlook based on the causal information and the structured dataset. (S111)

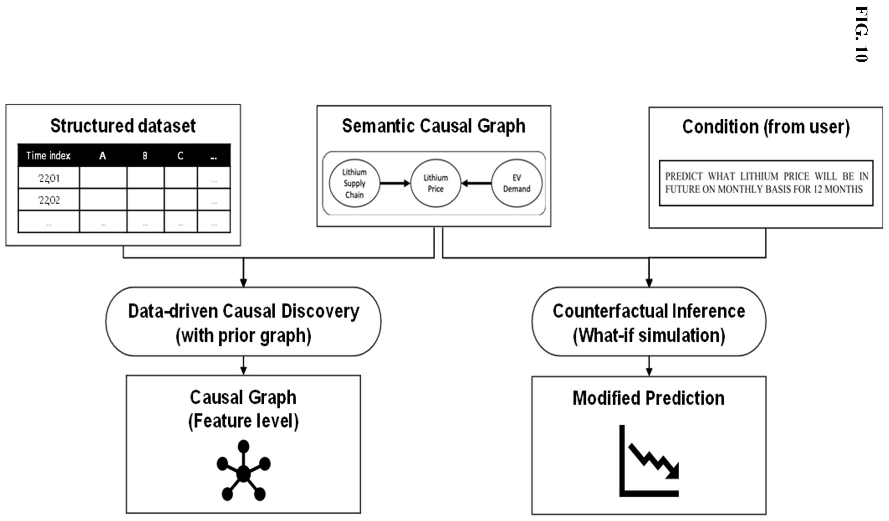

In detail, referring to FIG. 10, the server computing system 130 may interpret the basis for the final target outlook value based on the causal information at a semantic level and the structured dataset to output basis information.

Specifically, the server computing system 130 may generate a past causal graph at a feature level based on the past existing target value, the structured dataset, and the semantic causal graph based on the present from the structured dataset.

In addition, the server computing system 130 may generate a future causal graph at the feature level based on a causal discovery model (Data-driven Causal Discovery) trained from the future final target outlook value, structured data set and semantic causal graph with the past causal graph based on the present.

In addition, the server computing system 130 may provide the future causal graph by mapping the same to a target outlook value, thereby providing basis information on how the target outlook value was computed due to which features have an influence to some extent on the target outlook value.

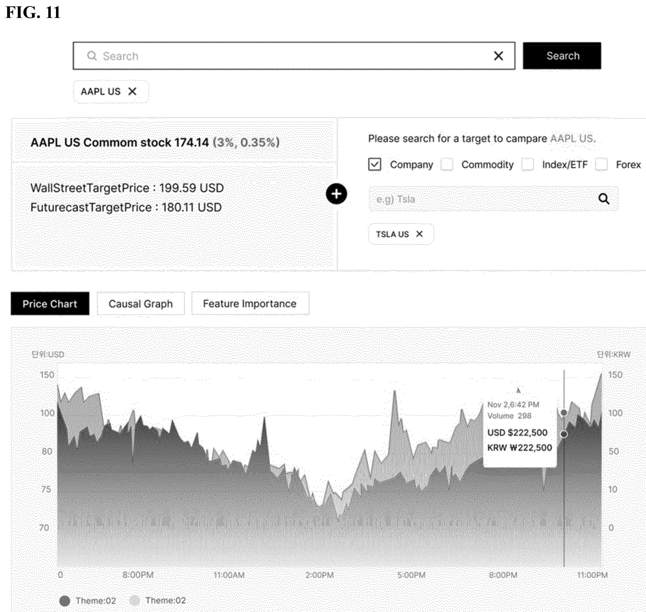

For example, referring to FIG. 11, the server computing system 130 may provide a target outlook graph representing the target outlook value computed for each prediction unit period during the total outlook period through the user computing device 110.

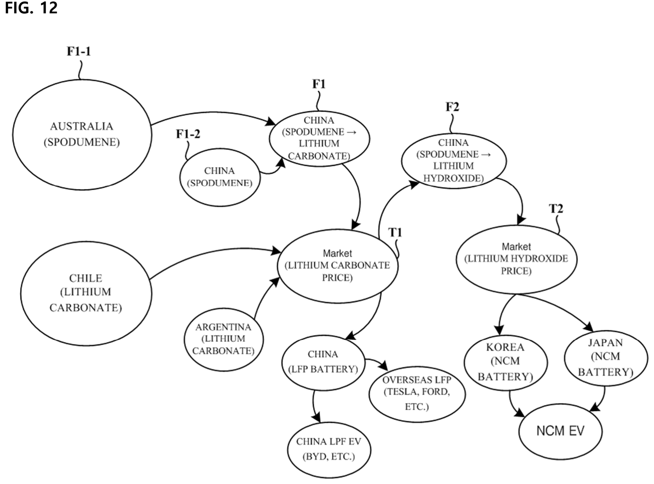

In addition, referring to FIG. 12, the server computing system 130 may provide a causal graph at the feature level that interprets the basis for predicting the target outlook value as basis information through the user computing device 110.

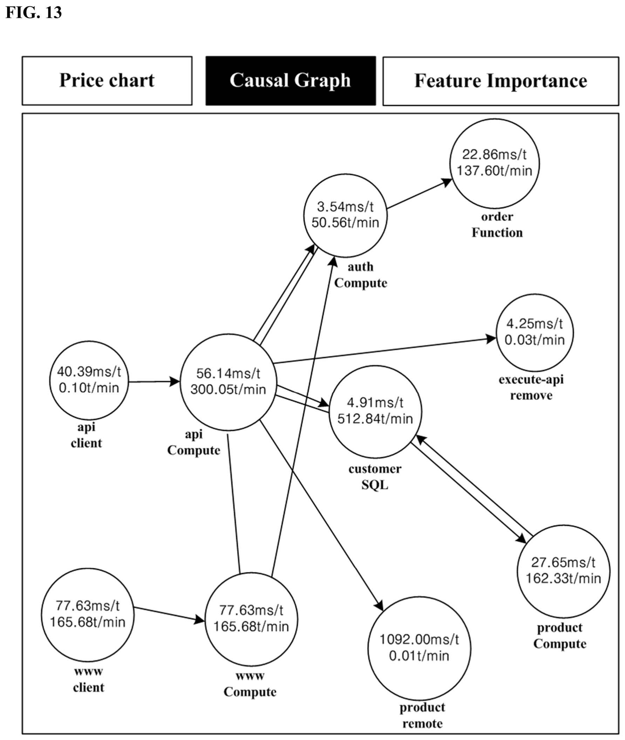

In particular, referring to FIG. 13, the server computing system 130 may further enhance user reliability for the target outlook by displaying specific numerical values of features that affected the predicted target outlook value at a specific prediction point in time.

Finally, the server computing system 130 may provide target outlook values and basis information in a changed environment by re-performing a what-if simulation according to the input prediction environment change after receiving input of a prediction environment change from a user after providing the computed final target outlook value and basis information. (S113)

Specifically, referring to FIG. 10, a user may input a change in the prediction environment by changing a feature of a target influence variable that affects the target outlook value or inputting a specific event occurrence through the user computing device 110.

In an embodiment, when there is a change in the target influence variable, the server computing system 130 may re-execute the process of interpreting the target outlook value and basis after changing the integrated structured data set according to the changed target influence variable, output a target outlook value and basis information according to a simulation, and provide the same to the user computing device 110.

In another embodiment, the server computing system 130 may receive input for a change in the predicted environment according to the occurrence of a specific event. In this connection, the server computing system 130 may quantitatively reflect the occurrence of a specific event in an event list, and then, after computing the changed quantitative data, change the integrated structured data set based thereon, and then re-execute the process of interpreting the target outlook value and basis, and output the target outlook value and basis information according to the simulation, and provide the same to the user computing device 110.

In addition, although the detailed description of the present disclosure has been described with reference to preferred embodiments of the present disclosure, it will be understood that those skilled in the art or those with ordinary knowledge in the art can modify and change the present disclosure in various ways without departing from the spirit and technical scope of the present disclosure described in the claims below. Accordingly, the technical scope of the present disclosure should not be limited to the contents described in the detailed description of the specification, but should be defined by the claims.

### [Industrial Applicability]

The present disclosure is directed to a method and system for predicting a future outlook for a target by analyzing structured and unstructured data at a semantic level, and thus has industrial applicability.

## Claims

1. A target prediction method for predicting a future outlook of a target performed by a computing device, the method comprising:
receiving a target prediction request from a user;
determining a target prediction element to be predicted in the received target prediction request;
searching for a target outlook report for the target of the determined target prediction element, and generating relationship information between the target and a target influence variable at a semantic level based on the searched target outlook report;
filtering structured data of a feature related to the target influence variable and unstructured data of a text document related to the target influence variable based on the target influence variable of the generated relationship information;
computing a target outlook of a future based on the filtered structured data and unstructured data;
generating a basis of the computed target outlook as the relationship information at a feature level; and
providing the user with the computed target outlook and the relationship information at the feature level.

2. The method of claim 1, wherein the reception of the target prediction request from the user comprises:
providing a chat interface to the user and receiving a text containing the target prediction request; and
contextually analyzing the received text to detect a context indicating the target prediction request.

3. The method of claim 2, wherein the determination of the target prediction element further comprises performing named entity recognition on the text containing the target prediction request and determining keywords representing the target as the target prediction element, a total outlook period, and a prediction unit period.

4. The method of claim 3, wherein the determination of the target prediction element further comprises listing a plurality of recognized target keywords and providing the same for the user to select when target keywords of a generic concept and target keywords of a specific concept for the target of the target prediction element are recognized in plural.

5. The method of claim 1, wherein the generation of the relationship information comprises:
defining the target influence variable that affects the target at the semantic level; and
generating a causal relationship graph as the relationship information with names of each defined target influence variable as node names.

6. The method of claim 5, wherein the generation of the relationship information further comprises indicating a sequence relationship between the target influence variables represented by each node of the causal relationship graph using arrows.

7. The method of claim 1, wherein the filtration of the structured data of the feature and the unstructured data of the text document related to the target influence variable comprises:
classifying features stored in a data store into the target influence variables defined at the semantic level; and
generating a structured data set by concatenating the structured data of the features classified into the target influence variables.

8. The method of claim 1, wherein the filtration of the structured data of the feature and the unstructured data of the text document related to the target influence variable comprises inputting the text document into a document classification prompt template and discriminating through a language model whether the text document is a document that affects the target.

9. The method of claim 8, wherein the computation of the target outlook of the future comprises:
detecting the target outlook report predicting an outlook of the target from the text document;
performing sentiment analysis on sentences predicting the target in the target outlook report using the language model, and classifying an outlook value of the target as positive, neutral, or negative for each target outlook report;
quantifying a level of a tone of the classified sentiment and returning the same as predicted scoring data; and
generating quantification data by listing the predicted scoring data of the target outlook report in a chronological order.

10. The method of claim 9, wherein the computation of the target outlook of the future comprises:
concatenating the structured data and the quantification data to generate an integrated structured data set; and
inputting the generated integrated structured data set into a prediction model to output a target outlook value.

11. The method of claim 10, wherein the computation of the target outlook of the future further comprises regulating the target outlook value based on the relationship information between the target and the target influence variable.

12. The method of claim 1, wherein the generation as the relationship information at the feature level comprises generating the features of the target influence variable that serves as a basis for predicting a target outlook value as the relationship information.

13. The method of claim 12, wherein the generation as the relationship information at the feature level comprises generating the relationship information comprising numerical values of the features that affect the predicted target outlook value at one point in time.

14. The method of claim 1, further comprising performing a simulation according to a received predicted environment change input when the predicted environment change input is received from the user.

15. The method of claim 14, wherein the performance of the simulation according to the received predicted environment change input comprises:
changing the structured data of the feature according to a changed target influence variable when there is a change to the feature of the target influence variable; and
re-executing a target outlook value and a process interpreting the basis based on the changed structured and unstructured data and outputting the target outlook value and basis information based on a what-if simulation.

16. The method of claim 1, wherein the performance of the simulation according to the received predicted environment change input further comprises detecting a case similar to a specific event occurrence and computing a target outlook value based on the detected case when the specific event occurrence is received from the user as the predicted environment change input.

17. A server computing system that receives a target prediction request from a user computing device and performs a target prediction task, the system comprising:
a data store that stores target prediction-related data;
a memory that stores instructions and data for performing the target prediction task; and
at least one processor for performing the target prediction task according to the instructions and data of the memory,
wherein the at least one processor is configured to:
receive a target prediction request from a user;
determine a target prediction element to be predicted in the received target prediction request;
search for a target outlook report for a target of the determined target prediction element, and generate relationship information between the target and a target influence variable at a semantic level based on the searched target outlook report;
filter structured data of a feature related to the target influence variable and unstructured data of a text document related to the target influence variable based on the target influence variable of the generated relationship information;
compute a target outlook of a future based on the filtered structured data and unstructured data;
generate a basis of the computed target outlook as the relationship information at a feature level; and
provide the user with the computed target outlook and the relationship information at the feature level.
